# EUROPEAN PATENT APPLICATION

(11) **EP 3 196 744 A1**
(43) Date of publication of application: **26.07.2017**
(21) Application number: 15841611.5
(22) Date of filing: 15.09.2015
(51) Int. Cl.: G06F 3/048

(54) **METHOD AND PORTABLE ELECTRONIC DEVICE HAVING A DOUBLE SCREEN**

(30) Priority: 15.09.2014 ES 201431335
(71) Applicant: Tecnología Sostenible y Responsable SL, 28850 Torrejon de Ardoz (ES); Garcia Manchado, Nilo, 28850 Torrejon De Ardoz (ES)
(72) Inventor: GARCÍA MANCHADO, Nilo, 28850 Torrejón de Ardoz (ES)
(74) Representative: Sahuquillo Huerta, Jesús
(86) International application number: PCT/ES2015/070669
(87) International publication number: WO 2016/042190

(57) **Abstract**

The invention relates to a method and to a portable electronic device (100) having a double screen (126, 126A) comprising the following steps: displaying an electronic file on a portable electronic device (100) which includes a touch screen (126) and an e-ink screen (126A); differentiating between the text content and the multimedia content in said electronic file; displaying the text content on an e-ink screen (126A) of the portable electronic device (100); and displaying the multimedia content of the file on a touch screen (126) of the portable electronic device (100).

## Description

### OBJECT OF THE INVENTION

The object of the present invention relates to a method and a software product applicable to a portable electronic device having a double screen, such that a first screen consists of the numerous variants of a LED technology screen, such as OLED, LCD-LED, AMOLED, and generally any screen backlit with LED technology, whereas a second screen is a reflexive-type e-ink screen, like those used in e-books.

### PRIOR ART

Patent document CN10374123 describes a double screen mobile telephone comprising a casing and a main display screen arranged on the front side of the casing, a telephone motherboard integrated in the casing itself, and an e-ink screen on the rear side of said casing, in a position that is opposite the main screen. The object of this distribution is to display only text characters on the e-ink screen, whereas the multimedia content is shown on the front screen. This purpose of this distribution involves savings in battery consumption, since e-ink screens are known to have a consumption that is much lower than that of LED-type backlit screens.

Nevertheless, the mentioned patent document only considers the possibility of displaying text on the e-ink screen while at the same time shutting off the backlit or main screen, which greatly hinders efficient use by the user, for example, in Web browsing applications.

In addition, patent document EP2674834 partially solves this problem since it incorporates two screens in a book format, as it discloses a portable device comprising a first touch screen and a second touch screen arranged on at least one foldable panel, and a method for controlling the portable device. In certain embodiments, a portable device displays pieces of information linked to one another through two touch screens, and a user can interact with the portable device through a touch gesture sensed in at least one of the two touch screens.

Nevertheless, in this case in addition to increasing battery consumption, since what are actually linked to one another are two mobile devices such that the pieces of information displayed on either one are associated with one another, the harmful effect for the ocular system described in patent document WO2014096475, incorporated herein by reference, is compounded.

### BRIEF DISCLOSURE OF THE INVENTION

Patent document WO2014096475 describes the damage to the ocular system which LED-type screens caused on users thereof. A solution to said problem is described in said patent document and consists of reducing the emissions of blue light comprised between 380 and 500 nm. Nevertheless, another way to reduce this unwanted effect on the ocular system naturally resides in the partial or complete reduction of said emissions. Likewise, e-ink screens are known to not emit blue light which is harmful for the ocular system, although they are only suitable for representing text and not multimedia files.

Therefore, a combination of the features of e-ink screens and the features of LED-type screens is needed to reduce the emissions of blue light which are detrimental to the ocular system. Said patent document CN10374123 uses two screens in opposite positions, such that when text is being read, the LED-type screen is shut off, and vice versa. Nevertheless, the present invention proposes that both screens (LED and ink) are on the same frontal plane, as proposed in patent document EP2674834, but selecting the text of any application and displaying it on the e-ink screen, whereas in parallel, only multimedia content (images, videos, etc.) is displayed on the LED screen, considerably reducing the emissions of the LED screen (an image or video is displayed only if there is one and at the will of the user) in the ocular system, given that more attention would be focused on the text displayed on the ink screen, considerably improving the reading of documents of any type and websites.

Additionally, since the weight of reading falls on the ink screen and very little information is displayed on the LED screen, the service life of the mobile device is prolonged and battery consumption is reduced.

Throughout the description and claims, the word "comprises" and its variants do not seek to exclude other technical features, additions, components or steps. For the persons skilled in the art, other objects, advantages and features of the invention will be inferred in part from description and in part from putting the invention into practice. The following examples and drawings are provided by way of illustration and do not seek to limit the present invention. Furthermore, the present invention covers all the possible combinations of particular and preferred embodiments mentioned herein.

### BRIEF DESCRIPTION OF THE DRAWINGS

A series of drawings that help to better understand the invention and are expressly related to an embodiment of said invention presented as a non-limiting example thereof is very briefly described below.
Figure 1 shows a diagram of the portable electronic device implementing the present invention.
Figure 2 shows a view of the portable electronic device object of the present invention.

### DETAILED DISCLOSURE OF AN EMBODIMENT OF THE INVENTION

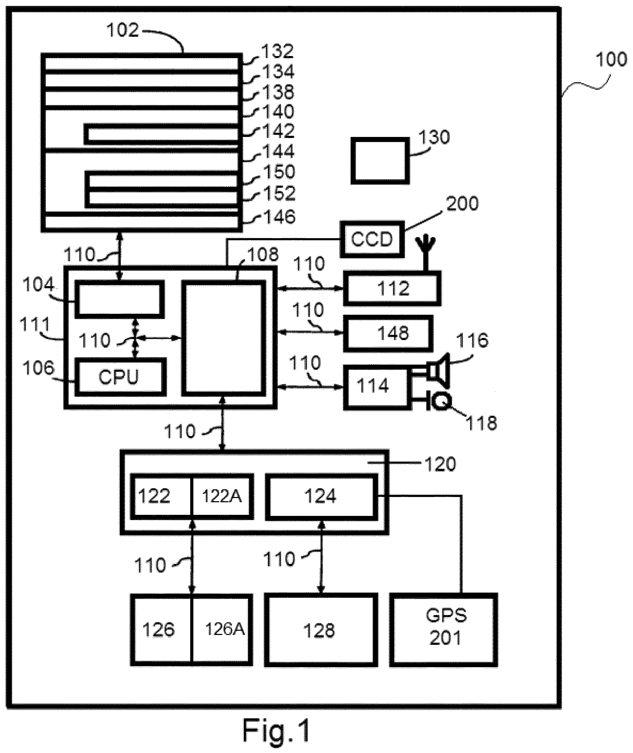

The present invention is implemented in a portable electronic device 100 that can be of any type selected from computers, tablets and mobile telephones, although a preferred architecture for a mobile device is shown in Figure 1. Generally any programmable communications device can be configured as a device for the present invention.

Figure 1 illustrates a portable electronic device according to some embodiments of the invention. The portable electronic device 100 of the invention includes a memory 102, a memory controller 104, one or more central processing units 106 (CPU), a peripheral interface 108, a RF circuit system 112, an audio circuit system 114, a loudspeaker 116, a microphone 118, an input/out (I/O) subsystem 120, a touch screen 126, other input or control devices 128 and an external port 148. These components communicate with one another over one or more communication buses or signal lines 110. The device 100 can be any portable electronic device, including but not limited to, a laptop computer, a tablet, a mobile telephone, a multimedia player, a personal digital assistant (PDA), or the like, including a combination of two or more of these items. It must be noted that the device 100 is only one example of a portable electronic device 100 and that the device 100 can have more or fewer components than those shown or a different configuration of components. The different components shown in Figure 1 can be implemented in hardware, software or in a combination of both, including one or more application-specific integrated circuits and/or integrated signal processing circuits. Likewise, the screen 126 is defined as a touch screen, although the invention can also be implemented in devices with a standard screen.

The memory 102 can include a high-speed random access memory and can also include a non-volatile memory, such as one or more magnetic disk storage devices, flash memory devices or other non-volatile solid-state memory devices. In some embodiments, the memory 102 can further include a storage remotely located with respect to the one or more processors 106, for example a storage connected to a network accessed through the RF circuit system 112 or the external port 148 and a communications network (not shown) such as the Internet, intranet(s), Local Area Networks (LAN), Wide Local Area Networks (WLAN), Storage Area Networks (SAN) and the like, or any suitable combinations thereof. Access to the memory 102 by other components of the device 100, such as the CPU 106 and the peripheral interface 108, can be controlled by means of the memory controller 104.

The peripheral interface 108 connects the input and output peripherals of the device to the CPU 106 and the memory 102. One or more processors 106 execute different software programs and/or instruction sets stored in the memory 102 for performing different functions of the device 100 and for data processing.

In some embodiments, the peripheral interface 108, CPU 106 and memory controller 104 can be implemented in a single chip, such as chip 111. In other embodiments, they can be implemented in several chips.

The RF (radio-frequency) circuit system 112 receives and sends electromagnetic waves. The RF circuit system 112 converts electrical signals into electromagnetic waves and vice versa, and communicates with communications networks and other communications devices through the electromagnetic waves. The RF circuit system 112 can include a circuit system that is well known for performing these functions, including but not limited to, an antenna system, a RF transceiver, one or more amplifiers, a tuner, one or more oscillators, a digital signal processor, a CODEC chipset, a Subscriber Identity Module (SIM) card, a memory, etc. The RF circuit system 112 can communicate with networks, such as the Internet, also referred to as the World Wide Web (WWW), an Intranet and/or a wireless network, such as a cellular telephone network, a wireless Local Area Network (LAN) and/or a Metropolitan Area Network (MAN), and with other devices by means of wireless communication. Wireless communication can use any of a plurality of communications standards, protocols and technologies, including but not limited to, Global System for Mobile Communications (GSM), Enhanced Data GMS Environment (EDGE), Wideband Code Division Multiple Access (W-CDMA), Code Division Multiple Access (CDMA), Time Division Multiple Access (TDMA), Bluetooth, wireless access (Wi-Fi) (for example, IEEE 802.11 a, IEEE 802.11 b, IEEE 802.11 g and/or IEEE 802.11 n), Voice over IP (VoIP) protocol, Wi-MAX, an e-mail, instant messaging and/or Short Message Service (SMS) protocol or any other suitable communication protocol, including communication protocols that have not yet been developed as of the date of filing this patent document.

The audio circuit system 114, loudspeaker 116 and microphone 118 provide an audio interface between a user and the device 100. The audio circuit system 114 receives audio data from the peripheral interface 108, converts the audio data into an electrical signal and transmits the electrical signal to the loudspeaker 116. The loudspeaker converts the electrical signal into sound waves that are audible for humans. The audio circuit system 114 also receives electrical signals converted by the microphone 116 from sound waves. The audio circuit system 114 converts the electrical signal into audio data and transmits the audio data to the peripheral interface 108 for processing. The audio data can be retrieved from and/or transmitted to the memory 102 and/or the RF circuit system 112 by means of the peripheral interface 108. In some embodiments, the audio circuit system 114 also includes an earbud/headphone connection (not shown). The earbud/headphone connection provides an interface between the audio circuit system 114 and removable audio input/output peripherals, such earbuds/headphones only for output or earbuds/headphones both for output (earbuds/headphones for one or both ears) and input (microphone).

The I/O subsystem 120 provides the interface between the input/output peripherals of the device 100, such as the touch screen 126, the e-ink screen 126A and other input/control devices 128, and the peripheral interface 108. The I/O subsystem 120 includes a touch screen controller 122, an e-ink screen controller 122A and one or more input controllers 124 for other input or control devices. The input controller or controllers 124 sends/send or receives/receive electrical signals to/from other input or control devices 128. The other input/control devices 128 can include physical buttons (for example push buttons, toggle buttons, etc.), dials, slide switches, and/or geographic positioning means 201, such as GPS or equivalents.

The touch screen 126 in this practical embodiment provides both an output interface and an input interface between the device and a user. The touch screen controller 122 sends/receives electrical signals to/from the touch screen 126. The touch screen 126 displays the visual output to the user. The visual output can include text, graphics, video and any combinations thereof. All or part of the visual output may correspond to user interface objects, the additional details of which are described further below.

The touch screen 126 also accepts user inputs based on the touch or haptic contact. The touch screen 126 forms a contact-sensitive surface that accepts user inputs. The touch screen 126 and the touch screen controller 122 (together with any of the associated modules and/or instruction sets of the memory 102) senses contact (and any movement or loss of contact) on the touch screen 126 and converts the sensed contact into an interaction with user interface objects, such as one or more programmable keys displayed on the touch screen. In one embodiment by way of example, a contact point between the touch screen 126 and the user corresponds to one or more of the user's fingers. The touch screen 126 can use LED (light-emitting diode screen) technology, LCD (liquid crystal display) technology or LPD (light-emitting polymer display) technology, although other screen technologies can be used in other embodiments. The touch screen 126 and the touch screen controller 122 can sense contact and any movement or lack of same by using any of a plurality of touch sensitivity technologies, including but not limited to, capacitive, resistive, infrared and surface acoustic wave technologies, as well as other arrangements of proximity sensors or other elements for determining one or more contact points with the touch screen 126.

In addition, the e-ink screen 126A in this practical embodiment provides an interface between the device and a user. The ink screen controller 122A sends/receives electrical signals to/from the ink screen 126A. The ink screen 126A displays the visual output to the user. The visual output includes text and graphics, the additional details of which are described further below.

The device 100 also includes a power supply system 130 for powering the different components. The power supply system 130 can include an energy management system, one or more power sources (for example batteries, alternating current (AC)), a rechargeable system, a power supply failure sensing circuit, a power converter or inverter, a power status indicator (for example, a light-emitting diode (LED)) and any other component associated with the generation, management and distribution of power in portable devices.

In some embodiments, the software components include an operating system 132, a communication module 134 (or instruction set), a contact/movement module 138 (or instruction set), a graphics module 140 (or instruction set), a user interface status module 144 (or instruction set) and one or more applications 146 (or instruction set).

The operating system 132 (for example, Darwin, RTXC, LINUX, UNIX, OS X, WINDOWS, or an embedded operating system), includes different software components and/or controllers for controlling and managing general system tasks (for example, memory management, storage device control, power management, etc.) and makes communication between the different hardware and software components easier.

The communication module 134 makes communicating with devices easier through one or more external ports 148 and also includes different software components for managing the data received by the RF circuit system 112 and/or the external port 148. The external port 148 (for example, a Universal Serial Bus (USB), FIREWIRE, etc.) is suitable for being connected directly to other devices or indirectly over a network (for example, the Internet, wireless LAN, etc.).

The contact/movement module 138 senses contact with the touch screen 126, together with the touch screen controller 122. The contact/movement module 138 includes different software components for performing different operations related to sensing contact with the touch screen 126, such as determining if there was contact, determining if the contact presents movement and tracking the movement through the touch screen, and determining if contact has been interrupted (i.e., if contact has ceased). Determining if the contact point presents movement can include determining the speed (magnitude), velocity (magnitude and direction) and/or acceleration (including magnitude and/or direction) of the contact point. In some embodiments, the contact/movement module 126 and the touch screen controller 122 also sense contact on the touch pad.

The graphics module 140 includes different software components known for displaying and viewing graphics on the touch screen 126. It must be noted that the term "graphics" includes any object that can be displayed to a user, including but not limited to, text, websites, icons (such as user interface objects including programmable keys), digital images, videos, animations and the like.

In some embodiments, the graphics module 140 includes an optical intensity module 142. The optical intensity module 142 controls the optical intensity of the graphic objects, such as user interface objects, displayed on the touch screen 126. The control of the optical intensity can include increasing or reducing the optical intensity of a graphic object. In some embodiments, the increase or reduction can follow predetermined functions.

The user interface status module 144 controls the status of the user interface of the device 100. The user interface status module 144 can include a locking module 150 and an unlocking module 152. The locking module detects that any of one or more conditions are met for transitioning the device 100 to a user interface locked status and for transitioning the device 100 to the locked status. The unlocking module detects that any of one or more conditions are met for transitioning the device to a user interface unlocked status and for transitioning the device 100 to the unlocked status.

The application or applications 130 can include any application installed in the device 100, including but not limited to, a browser, an address book, a contact list, e-mail, instant messaging, text processing, keyboard emulations, graphic objects, JAVA applications, encryption, digital rights management, voice recognition, voice replication, position determination capacity (such as that provided by the Global Positioning System (GPS)), a music player (playing recorded music stored in one or more files, such as MP3 or AAC files), etc.

In some embodiments, the device 100 can include one or more optional optic sensors (not shown), such as CMOS or CCD image sensors 200, for use in imaging applications.

Nevertheless, the mentioned hardware structure is one of the possible structures and it must be taken into account that the device 100 can include other image capture elements such as a camera, a scanner, a laser tracer or the combination of any of these types of devices, which may provide the mobile device with the representation of the actual environment in a video format, an image sequence format, a vector format or any type of combination of the mentioned formats.

Likewise, the device 100 can include geographic positioning devices based on GPS positioning satellite networks, geographic positioning assistance devices based on GPS satellite networks and IP location of internet networks -AGPS-, geographic positioning devices based on the triangulation of radio signals provided by Wi-Fi antennas and Bluetooth® devices (ISSP), the combination of any of these mentioned devices or any type of device that allows providing the mobile device with numerical data with respect to its geographic positioning.

The device 100 can include any type of element capable of representing images in real time with a minimum 24 FPS (Frames Per Second), such as TFT displays, TFT-LED displays, TFT-OLED displays, TFT-Retina displays, the combination of any of the aforementioned, in addition to new generation Holo-TFT displays, transparent displays and micro-projectors or any graphical representation device that can provide the mobile device 100 with a way to represent visual content to the user.

The device 100 includes a processor or set of processors which by themselves or combined with graphics processors such as a GPU (Graphics Processing Unit) or APU (Accelerated Processing Unit) can provide the mobile device 100 with the capacity to represent vector graphics in real execution time and to form textured polygons with the former, through vector representation libraries (sets of standard graphical representation procedures for different platforms) such as OpenGL, DirectX or any type of libraries intended for this purpose.

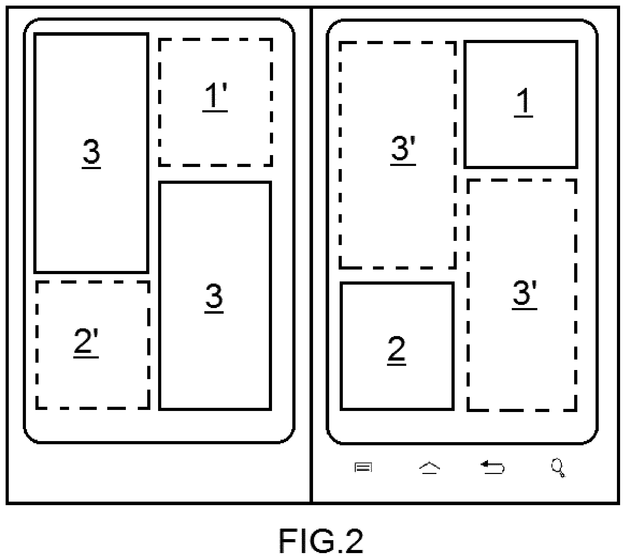

With respect to Figure 2, the portable electronic device 100 is shown with two screens (126, 126A) arranged in parallel, wherein one of the screens is a touch screen (126) whereas the other screen is an e-ink screen (126A). The parallel arrangement of both screens (126, 126A), whether the arrangement is in a vertical configuration, as shown in Figure 2, or in a horizontal configuration, with one of them being located above the other, makes it easier for the user to have within eyesight at a glance all the information displayed on said screens (126, 126A), which obviously results in the use of the portable electronic device 100 being more versatile.

Therefore, in an example of normal use of the portable electronic device 100, images (1, 2) are displayed on the touch screen 126 in the same position as what would be displayed in the original document, the text (3') being concealed, such that the minimum number of short wavelengths comprised between 380 and 500 nm and/or between 500 nm and 590 nm are emitted, i.e., the LEDs of the touch screen 126 emit with minimum blue and green in the parts of the screen that would correspond with text, whereas in the parts of the touch screen 126 that correspond with the position of the images (1,2), the emission of the LEDs would be a normal emission for correctly displaying said elements.

It must be noted that the reduction of the emissions in areas of the touch screen 126 is described in the patent document WO2014096475. In other words, the emission of short wavelengths comprised between 380 and 500 nm is selectively reduced between a maximum and minimum absorbance threshold of at least part of the LEDs contained on the touch screen (126) without completely blocking the passage of the wavelengths comprised between 380 and 500 nm where this selective reduction is done by changing the colors in the operating system (134) or in the color intensity module (142).

The text (3') that is not displayed is shown (3), nevertheless, on the e-ink screen 126A, also in the same position as that of the original document, leaving the space supposedly taken up by the images (1',2') free, such that, in reality, the same effect is achieved on the user as with a single document on a single screen, but considerably reducing harmful emissions thereof and increasing reading comfort, thereby obtaining the same advantages as an e-book reader combined with the power of a mobile telephone, electronic tablet or laptop computer.

## Claims

1. A computer-implemented method comprising the steps of:
a) Displaying a single electronic file on a portable electronic device (100) comprising a touch screen (126) and an e-ink screen (126A); and
b) Differentiating between the text content and the multimedia content in said electronic file, such that:
a. The text content is displayed on an e-ink screen (126A) of the portable electronic device (100) concealing the multimedia content on said e-ink screen (126A); and
b. The multimedia content of the file is displayed on a touch screen (126) of the portable electronic device (100) concealing the text content on said touch screen (126);
c) and wherein the text content and the multimedia content are located in the same position (3, 3') within both screens (126, 126A) as in the single electronic file; and
wherein the emission of short wavelengths comprised between 380 and 500 nm is selectively reduced between a maximum and minimum absorbance threshold of the LEDs contained on the touch screen (126) which are unrelated to the display of the multimedia content (3'), but without completely blocking the passage of the wavelengths comprised between 380 and 500 nm; and wherein said selective reduction is done by changing the colors in the operating system (134) or in the color intensity module (142).

2. The method according to claim 1, wherein the selective reduction is furthermore done on short wavelengths comprised between 500 and 590 nm.

3. A portable electronic device (100) having a double screen, comprising:
a touch screen (126);
an e-ink screen (126A);
one or more processors (106);
a memory (102); and
one or more programs (132 to 146), wherein the program or programs (132 to 146) are stored in the memory (102) and configured for being executed by means of the processor or processors (106); **characterized in that** the programs (132 to 146) include instructions for:
displaying a single electronic file on the screens (126, 126A);
differentiating between the text content and the multimedia content in said electronic file, such that:
the text content is displayed on the e-ink screen (126A) of the portable electronic device (100) concealing the multimedia content; and
the multimedia content of the file is displayed on a touch screen (126) of the portable electronic device (100);
such that the text content and the multimedia content are located in the same position (3, 3') within both screens (126, 126A) as in the single electronic file; and
wherein the programs (132 to 146) include instructions for the selective reduction of the emission of short wavelengths comprised between 380 and 500 nm between a maximum and minimum absorbance threshold of the LEDs contained on the touch screen (126) which are unrelated to the display of the multimedia content (3'), without completely blocking the passage of the wavelengths comprised between 380 and 500 nm, wherein said selective reduction is done by changing the colors in the operating system (134) or in the color intensity module (142).

4. The device (100) according to claim 3, further comprising instructions for selectively reducing emissions in the wavelengths comprised between 500 and 590 nm.

5. The device (100) according to any of claims 3 to 4, wherein the screens (126, 126A) are arranged parallel to one another.

6. A software product with instructions configured for being executed by one or more processors which, when they are executed by a portable electronic device (100) according to any of claims 3 to 4, said portable electronic device (100) carries out the method according to any of claims 1 to 2.
